# EUROPEAN PATENT APPLICATION

(11) **EP 4 310 321 A1**
(43) Date of publication of application: **24.01.2024**
(21) Application number: 23186745.8
(22) Date of filing: 20.07.2023
(51) Int. Cl.: F03D 3/02, F03D 3/04, F03D 9/45

(54) **WIND TURBINE AND USE THEREOF**

(30) Priority: 20.07.2022 NL 2032558
(71) Applicant: Tornilo B.V., 1792 CV Oudeschild (NL)
(72) Inventor: Switzer, Hendrik Frederik, 1792 CV Oudeschild (NL)
(74) Representative: Arnold & Siedsma

(57) **Abstract**

The invention relates to a wind turbine and a method for generating electricity. The wind turbine comprises:
- a cylindrical housing comprising an upper plate and lower plate which each extend in a first direction and are arranged substantially parallel at a distance from each other, and further comprising a number of wind catchers extending substantially between the upper and lower plate;
- a plurality of vanes which are arranged in the housing and are connected rotatably to the housing, wherein a rotation axis of the vanes extends in a second direction which is substantially perpendicular to the first direction; and
- a generator comprising a number of magnets and a number of coils arranged on the housing, wherein the magnets rotate relative to the coils due to rotation of the vanes.

## Description

The present invention relates to a wind turbine for generating electricity. The invention further relates to a method for generating electricity.

Known in practice are wind turbines which are provided with elongate vanes which extend radially from a central rotatable vertical shaft. The vanes are configured to rotate under the influence of wind, wherein the rotational energy of the vanes is converted into electricity by the central shaft. A generator is connected to the central rotatable shaft for this purpose. The length of the wind turbines can vary from several metres to a hundred or hundreds of metres. A drawback of these wind turbines is that they take up a great deal of space, making them unsuitable for supplying electricity to most homes.

Alternatively, there are also vertical shaft wind turbines which comprise a vertical rotation shaft. The vertical shaft wind turbines generally have smaller dimensions whereby they can be positioned near or on a home more easily. A drawback of the vertical shaft wind turbines is that it is not efficient to provide a plurality of vertical shaft wind turbines on the same home, since they can easily interfere with one another's wind stream area.

The present invention has for its object to obviate or at least reduce the above stated problems. It can be a particular object of the invention to provide a wind turbine which is suitable for being placed on or close to homes and whereby a plurality of wind turbines can be placed close together in simple manner.

This object is achieved with a wind turbine, wherein the wind turbine comprises:
- a cylindrical housing comprising an upper plate and lower plate which each extend in a first direction and are arranged substantially parallel at a distance from each other, and further comprising a number of wind catchers extending substantially between the upper and lower plate;
- a plurality of vanes which are arranged in the housing and are connected rotatably to the housing, wherein a rotation axis of the vanes extends in a second direction which is substantially perpendicular to the first direction; and
- a generator comprising a number of and a number of coils arranged on the housing, wherein the magnets rotate relative to the coils due to rotation of the vanes.

The vanes optionally extend from the housing at least partially in radial direction.

An advantage of the invention is that the vanes are provided in the housing, whereby the vanes are prevented from casting a shadow.

A further advantage is that noise nuisance caused by the wind turbine is prevented by providing the vanes in the housing. The wind catchers, which are positioned close to an outer periphery of the housing, particularly prevent sound waves from being able to propagate outside the housing.

Yet another advantage is that, owing to the vanes being shielded by the upper and lower plate in combination with the wind catchers, flying animals such as birds cannot hit the vanes unintentionally and become wounded or die.

A further advantage of the wind turbine according to the invention is that the wind turbine can be used to supply current to private homes.

The upper and lower plate preferably cylindrical, wherein the wind catchers extend between the upper and lower plate, close to an outer edge of the upper and lower plate.

Rotation of the vanes rotates the magnets relative to the coils. The relative movement of the magnets relative to the coils generates an induction current whereby current can be generated by means of the wind.

In embodiment according to the invention each of the plurality of wind catchers extends at least partially inward from an outer periphery of the housing, as seen in the second direction, such that an inner space is provided between the wind catchers, wherein air inlet openings are provided on the outer periphery between the plurality of wind catchers for the purpose of allowing air into the inner space.

The wind catchers are preferably provided at an angle relative to the outer periphery and/or outer edge of the housing. The wind catchers prevent wind from flowing counter to the rotation direction of the vanes. A further advantage is that the area of the wind which is carried to the vanes is greater than if the wind catchers were not present. Yet another advantage is that the wind catchers guide the wind to the vanes, whereby an optimal torque on the vanes and thereby rotation of the vanes is realized.

In an embodiment according to the invention the wind catchers are panel-like and have a curved section, as seen in the second direction.

The curved wind catchers provide for a more effective guiding of wind. The wind catchers are preferably curved such that the first part of the wind catchers extends, as seen in the second direction, at an acute angle to the outer periphery or outer edge of the housing from the outer periphery or outer edge of the housing, wherein the curvature is formed such that an end part of the wind catcher extends to a position behind the rotation axis. The extending of the end part of the wind catcher is understood to mean where the end part of the wind catcher is directed. Extending to a position behind the rotation axis is understood to mean that a fictional line extending from the end part in the same direction in which the end part is directed does not cross a radius extending from the first part of the wind catcher to the rotation axis. This realizes an effective guiding to the vanes.

The acute angle lies in the range of 20-70 degrees, preferably in the range of 30-60 degrees, and most preferably in the range of 35-45 degrees.

In an embodiment according to the invention air outlet openings are provided on an inner space side of the wind catchers, wherein a size of the air inlet openings is greater than a size of the air outlet openings.

The difference in size between the air inlet openings and air outlet openings achieves that the Venturi effect occurs, whereby a stronger airflow is achieved close to the air outlet openings which lead to the vanes. A greater torque is hereby exerted on the vanes, which increases the rotation speed and thereby the output of the wind turbine as a whole.

In an embodiment according to the invention an edge of the wind catchers which extends substantially in the second direction and is positioned closest to the vanes comprises an inward curve, wherein the inward curve is directed away from the vanes.

The inward curve reduces the wind pressure built up by the vanes in that an additional space is realized between the wind catchers and the vanes. This increases the efficiency of the wind turbine. In the context of the present application inward-directed is understood to mean relative to the wind catcher itself.

In an embodiment according to the invention the vanes are twisted.

An advantage of the vanes being twisted is that the wind stream onto the vanes is converted into a rotation more effectively.

In an embodiment according to the invention the vanes are panel-like and extend at least partially in the second direction, wherein the vanes are curved as seen in a radial direction.

The vanes are panel-like, with a length and a width. The longitudinal direction of the vanes preferably extends substantially parallel to the second direction. An advantage of the vanes which are curved, as seen in a radial direction, is that the vanes thereby catch the wind in improved manner. The vanes are preferably concave. The vanes are more preferably concave in the second direction. In other words, the curvature of the vanes is realized along the longitudinal direction of the vanes.

In an embodiment according to the invention an inner edge of the vanes which extends substantially in the second direction and is positioned closest to the rotation axis comprises an outward-directed curve, wherein the outward-directed curve extends toward the rotation axis.

Due to the outward-directed curve a line of sight running radially through the wind turbine is blocked. This prevents any unpleasant glare when the sun shines through the wind turbine. Alternatively or additionally, the protruding curve provides for an optimal wind catch. In the context of the present application outward-directed is understood to mean relative to the vanes themselves.

In an embodiment according to the invention the vanes extend radially from a predetermined distance from the rotation axis to a position close to the wind vanes as seen in a second direction, such that an inner radial space is formed between the vanes for allowing in airflow.

An advantage of the inner radial space is that airflow can result, whereby air does not accumulate. This results in an improved rotation of the vanes and so more generation of current.

In an embodiment according to the invention the generator comprises a rotor and a stator, wherein the stator is connected fixedly to the housing and is provided with coils, and wherein the rotor is connected to the vanes and is connected rotatably to the stator and is provided with permanent magnets.

The rotor and permanent magnets preferably extend substantially in the second direction.

In an embodiment according to the invention the rotor comprises an inner rotor and an outer rotor, wherein the stator is positioned between the inner rotor and the outer rotor, and wherein permanent magnets are provided on the inner rotor and the outer rotor.

Because the coils are enclosed on both sides by permanent magnets, an induction current is generated in extra effective manner during rotation of the rotor about the stator.

In an embodiment according to the invention the vanes comprise a circular intermediate element which extends in the first direction for the purpose of stabilizing the vanes.

The intermediate element is preferably a circular element which extends in the first direction, optionally parallel to the upper and lower plate. The intermediate element is preferably located, as seen in the longitudinal direction, between the upper and lower side of the vanes. The intermediate element can be plate-like. The intermediate element can be connected operatively to the vanes. In an embodiment the intermediate element is connected fixedly to the vanes.

Alternatively or additionally, the wind turbine comprises a lower vane plate and upper vane plate. The lower vane plate and upper vane plate have the same features as the intermediate plate, with the difference that the lower vane plate and upper vane plate are positioned respectively on the lower side and upper side of the vanes.

An advantage of the intermediate element is that the vanes are more stable. This reduces the chances of undesired vibration of the vanes. This reduces the chances of damage to the vanes, the housing and/or the generator. This increases the lifespan of the wind turbine. A further advantage of reducing the chances of vibration is that less energy is lost, which increases the efficiency of the wind turbine. The advantages and effects as described for the intermediate element also apply to the lower vane plate and upper vane plate.

In an embodiment according to the invention the generator comprises alternately permanent magnets and coils, as seen along the second direction.

Along the second direction, so as seen in the first direction, the generator comprises alternately permanent magnets and coils. An advantage hereof is that magnets and coils placed one above the other can interact in order to thus generate current during rotation of the magnets relative to the coils. A further advantage is that more magnets and coils can thus be placed in the generator, this providing the option for a greater output.

In an embodiment according to the invention the magnets are connected to the vanes and the coils are arranged on a fixed shaft of the housing which extends along the rotation axis, wherein the coils and magnets are provided in pairs, wherein each individual coil and magnet of the pairs are positioned on opposite sides of the fixed shaft.

The fixed shaft forms part of the housing. Because the coils and magnets are provided in pairs on opposite sides of the fixed shaft, a good combination of resistance and current generation is obtained. The resistance due to the pairs of coils and magnets is particularly relatively low, whereby a first rotation speed of the magnet is obtained.

It will be apparent to the skilled person that the generator can also be provided separately, alone, without the housing and the vanes. This allows the generator to be used for applications other than the wind turbine according to the invention.

The generator according to the invention comprises a rotation axis extending in a first direction, wherein coils and magnets are positioned alternately along the first direction, wherein the magnets are provided rotatably relative to the magnets.

By placing the coils and magnets alternately along the first direction the magnets can be placed closer to the rotation axis. Because the magnets are hereby placed closer to the rotation axis than the vanes, the torque or lever on the magnet is optimized. A further advantage hereof is that the current generation becomes more efficient.

The coils are optionally copper coils. The magnets are optionally permanent magnets. The rotation axis can be a fictional axis or a fixed shaft.

In an embodiment the coils and magnets are placed in line, as seen in the first direction. This realizes an efficient current generation.

In an embodiment according to the invention the coils comprise a straight part and an arcuate part connected thereto. The windings of the coil are preferably provided round the straight part and arcuate part.

In an embodiment the magnets are beam-shaped, wherein the longitudinal direction of the magnet is substantially parallel to the straight part of the coil in a first position wherein the magnet is positioned in line with the coil, as seen in the first direction.

In an embodiment the coils and magnets are provided in pairs, wherein each individual coil and magnet of the pairs are positioned on opposite sides of the rotation axis. The straight parts of the coil are preferably directed toward each other on opposite sides of the rotation axis. The longitudinal surfaces of the magnets are preferably directed toward each other on opposite sides of the rotation axis.

The pairs of magnets can be referred to as magnetic elements and the pairs of coils can be referred to as coil elements. In an embodiment the magnetic elements and coil elements are positioned alternately along the first direction.

In an embodiment according to the invention the coils are provided on a fixed shaft which is positioned collinearly with the rotation axis, wherein the magnets are provided on a hollow tube which is positioned collinearly with the rotation axis, wherein the hollow tube is arranged for rotation about the fixed shaft.

The fixed shaft and the coils are preferably arranged in the hollow tube.

In an embodiment the coils are connected electrically to each other.

The features of the generator as described above can also be combined with the wind turbine according to the invention.

In an embodiment according to the invention the vanes and/or the housing are made of polypropylene.

An advantage of being made of polypropylene is that polypropylene is simultaneously light and strong, making the wind turbine able to withstand great wind speeds. A further advantage is that polypropylene is a durable material which can be readily reused. This reduces the ecological footprint of the manufacture of the wind turbine.

The invention further relates to an assembly of wind turbines, wherein at least a part of the assembly of wind turbines is stacked on top of each other, wherein the lower plate of a first wind turbine supports on an upper plate of a second wind turbine.

A greater capacity of current generation is realized in simple manner by stacking wind turbines on top of each other. Alternatively or additionally, a wall of wind turbines can be provided by stacking wind turbines on top of each other.

The invention further relates to a wind turbine system comprising a wind turbine according to the invention and a mounting system for placing the wind turbine on a roof, wherein the mounting system comprises a reverse V-shaped cutaway on a first side for the purpose of placing the mounting system on a gable roof and/or comprises a flat mounting surface on an opposite second side for the purpose of supporting the wind turbine.

The reverse V-shaped cutaway on a first side is preferably seen in a side view. The reverse V-shaped cutaway comprises two legs, wherein each leg is configured to be placed on a side wall of a gable roof. The reverse V-shaped cutaway enables the mounting system to be positioned and secured on a gable roof in simple manner.

In an embodiment according to the invention the mounting system further comprises two mounting lines, wherein each of the mounting lines is configured to attach the mounting system to a side wall.

With the mounting lines a reliable anchoring of the mounting system on the gable roof is realized. The mounting system can alternatively be attached fixedly to the roof. An advantage of the mounting lines is that the roof can remain intact, this lowering the chances of the roof leaking.

The invention further relates to a building provided with a wind turbine or wind turbine system according to any one of the foregoing claims.

The building has similar advantages and effects as described for the wind turbine and the wind turbine system.

The invention further relates to a method for generating electricity, comprising of:
- providing a wind turbine according to the invention or wind turbine system according to the invention; and
- having the wind rotate the generator for the purpose of generating electricity.

The method has similar advantages and effects as described for the wind turbine and the wind turbine system.

Further features, advantages and details of the invention are described on the basis of embodiments thereof, wherein reference is made to the accompanying drawings, in which:
- figure 1 shows an embodiment of a wind turbine according to the invention;
- figures 2A-C show sections of the generator according to the invention;
- figure 3 shows a cross-section of the wind turbine according to the invention; and
- figure 4 shows vanes of a wind turbine according to the invention; and
- figures 5A-B show a mounting system according to the invention.

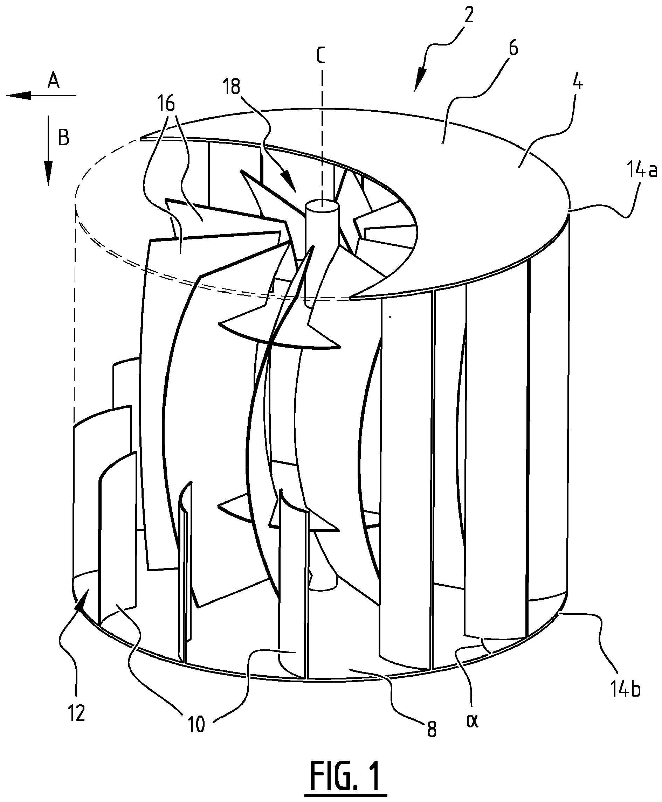

Wind turbine 2 (figure 1) comprises housing 4 which is provided with upper plate 6 and lower plate 8. Upper plate 6 and lower plate 8 extend in a first direction A and are arranged parallel to each other. Provided between upper plate 6 and lower plate 8 are wind catchers 10. Wind catchers 10 are provided close to outer periphery 12 which extends between outer edge 14a of upper plate 6 and outer edge 14b of lower plate 8. In the shown embodiment upper plate 6 and lower plate 8 are circular, whereby housing 4 as a whole has a cylindrical form.

Wind catchers 10 are arranged at a regular distance from each other and extend from outer periphery 12 at angle α of 40 degrees with outer edge 14b. Wind catchers 10 are substantially panel-like.

Inside wind catchers 10 vanes 16 are arranged rotatably in housing 4. Vanes 16 are rotatable about rotation axis C which extends perpendicularly relative to first direction A and between upper plate 6 and lower plate 8. Rotation axis C extends parallel to second direction B, wherein second direction B extends perpendicularly of direction A. Because upper plate 6 and lower plate 8 are flat, it is possible to stack a plurality of wind turbines 2 on top of each other in simple manner. Generator 18 is provided around rotation axis C.

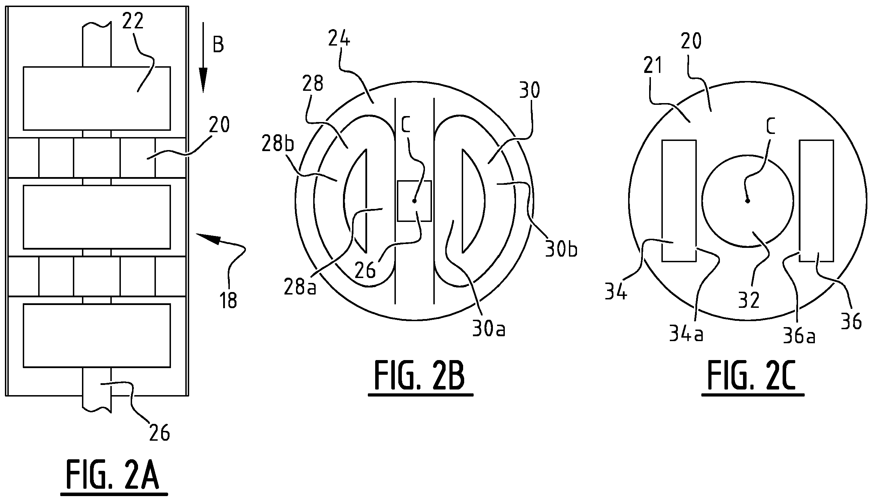

Generator 18 (figure 2A) comprises a plurality of magnetic elements 20 and coil elements 22. In the shown embodiment magnetic elements 20 are permanent magnets and coil element 22 are copper coils. It will be apparent to the skilled person that other magnets and coils are also possible. The magnetic elements 20 and coil element 22 are placed in mutually alternating manner as seen in second direction B. This means that, as seen in second direction B, two magnetic elements 20 are positioned on either side of coil elements 22 and two coil elements 22 are positioned on either side of magnetic elements 20. Coil elements 22 are connected electrically to each other.

Coil elements 22 (figure 2B) comprises a circular housing 24 which is mounted fixedly on central shaft 26. Mounted on opposite sides of central shaft 26 are coils 28 and 30. Coils 28 and 30 each comprise a straight part 28a, 30a and a curved part 28b, 30b. Curved parts 28b, 30b comprise a portion of a circular arc. Straight parts 28a, 30a are directed toward each other and are placed opposite each other relative to central shaft 26.

Magnetic elements 20 (figure 2C) comprise a circular housing 21 with provided therein circular opening 32 through which central shaft 26 can extend. Circular opening 32 and central shaft 26 can be connected operatively to each other with a ball bearing. This allows magnets 34 to rotate about central shaft 26. In this embodiment circular housing 21 is attached to vanes 16. Magnets 34 and 36 are positioned on opposite sides of circular opening 32. In the shown embodiment magnets 34 and 36 are beam-shaped and long sides 34a, 36a of magnets 34 and 36 are directed toward each other. Coils 28, 30 and magnets 34, 36 are positioned the same distance from rotation axis C, such that magnets 34, 36 move straight over coils 28, 30 during relative rotation. In other words, coils 28, 30 and magnets 34, 36 are positioned in line as seen in second direction B. This provides for an efficient generation of current.

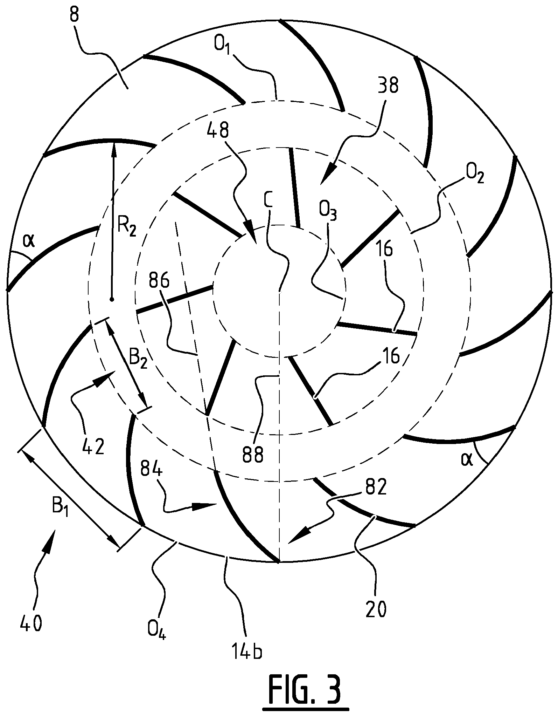

Bottom plate 8 (figure 3) comprises a number of wind catchers 20 arranged thereon. In the shown image only the attachment of wind catcher 20 to bottom plate 8 is shown. Wind catchers 20 extend from outer edge 14b to radius O₁. The space which is defined by radius O₁ extending in second direction B is inner space 38. Inner space 38 is the space in which vanes 16 are provided. At outer edge 14b wind catchers 20 form an angle α of 40 degrees with outer edge 14b. Outer edge 14b coincides with periphery O₄. Wind catchers 20 extend here in the direction of rotation axis C. First part 82 of wind catcher 20 forms an angle α of 40 degrees with outer edge 14b or periphery O₄. Wind catchers are provided with a curvature with a radius R₂. End part 84, close to inner space 38, extends along direction line 86. Direction line 86 is the direction in which end part 84 extends. Direction line 86 substantially crosses the centre of wind catchers 20 so that the wind caught by wind catcher 20 is fully utilized by vanes 16. The curvature of wind catchers 20 is such that direction line 86 does not cross radius 88, which extends from the point where first part 82 is attached to outer edge 14b. Vanes 16 are curved such that the concave surface of vanes 16 is directed toward direction line 86 of wind catchers 20.

At outer edge 14b air inlet openings 40 are located between two adjacent wind catchers 20. Air inlet openings 40 extend from lower plate 8 to upper plate 6. Air inlet openings 40 have a width B₁. At radius O₁ air outlet openings 42 are located between two adjacent wind catchers 20. Air outlet openings 42 have a width B₂. Width B₁ is greater than width B₂. This creates a Venturi effect whereby the air accelerates in the direction of inner space 38.

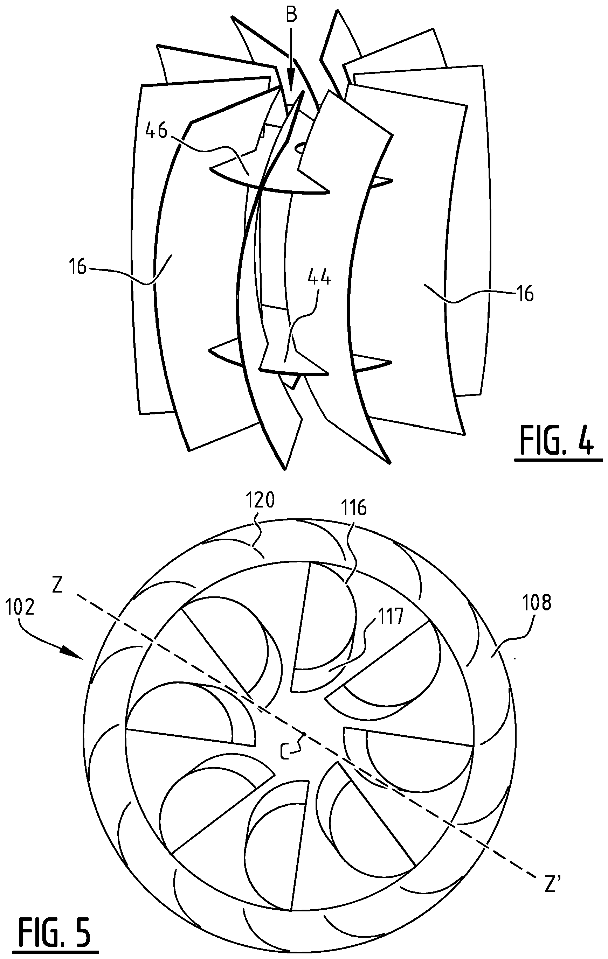

Vanes 16 (figure 4) are panel-like and extend substantially in second direction B. The longitudinal direction of vanes 16 is further curved as seen in a radial direction. In the shown embodiment vanes 16 are twisted. Vanes 16 extend from an outer vane periphery O₂ to an inner vane periphery O₃. This creates inner radial space 48 between vanes 16, which space allows for airflow around rotation axis C. Intermediate plates 44, 46 are arranged between vanes 16. In the shown embodiment intermediate plates 44, 46 are circular and arranged centrally around rotation axis C.

At the outer edge of wind turbine 102 wind catchers 120 (figure 5) are arranged on bottom plate 108. Wind catchers 120 are connected fixedly to bottom plate 108. Wind catchers 120 and bottom plate 108 function as stator. Arranged inside wind catchers 120 is a rotor which comprises vanes 116, among other things. The rotor is rotatable relative to the stator. Vanes 116 are provided with a protruding curve 117. Protruding curve 117 blocks a line of sight Z-Z' which extends radially through wind turbine 102. This prevents any unpleasant glare when the sun shines through wind turbine 102. Alternatively or additionally, protruding curve 117 provides for an optimal wind catch.

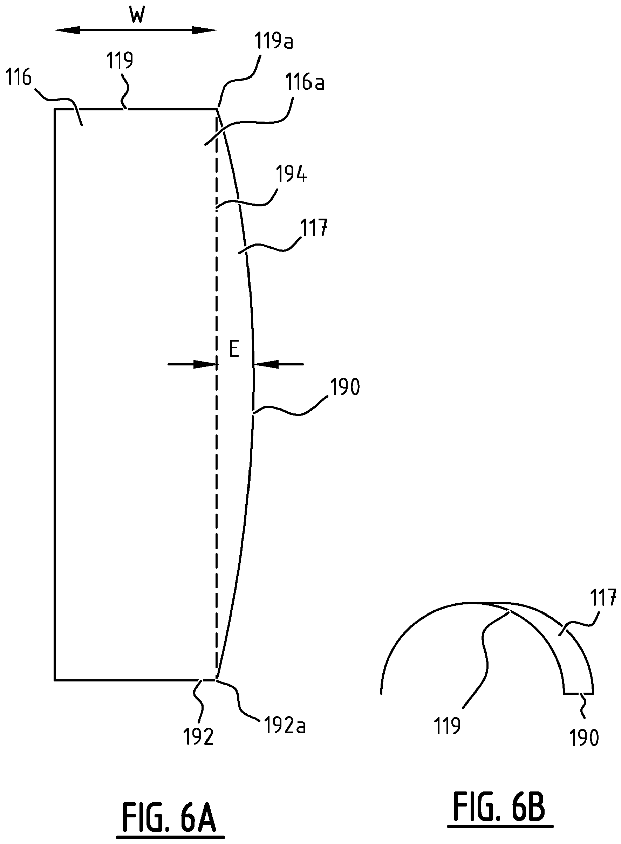

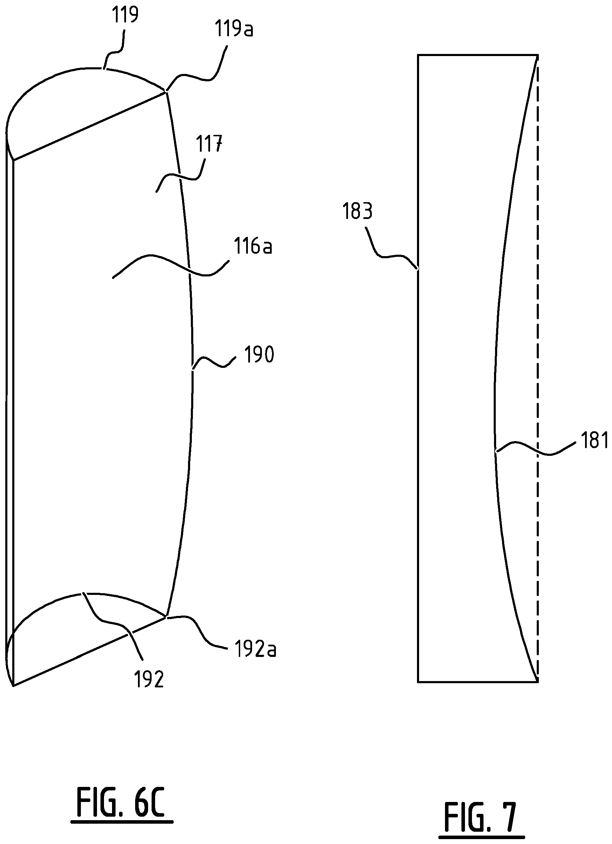

Vanes 116 (figures 6A-6C) take the form of a curved plate-like vane. Inner surface 116a is concave. Figure 6B, which shows a top view of vane 116, shows that a bridge 119 comprises substantially a semicircular arc. Protruding curve 117 is a convexity which extends from upper edge 119. Figure 6C, which shows a perspective view of vane 116, shows that the curve edge 190 of protruding curve 117 extends between end point 119a of upper edge 119 and end point 192a of lower edge 192. Curve edge 190 extends outward as seen from inner surface 116a. The maximum deflection E of curve edge 190 relative to straight line 194 extending between end point 119a of upper edge 119 and end point 192a of lower edge 192 lies in the range of 5-25%, and in the shown embodiment is about 18%, relative to the width W of vane 116.

Wind catcher 120 (figure 7) takes the form of a curved plate-like wind catcher. Wind catcher 120 is provided with an inward-directed curve 181. Inward-directed curve 181 is configured to be positioned close to vanes 116. In other words, inward-directed curve 181 is positioned closer to rotation point C than side edge 183.

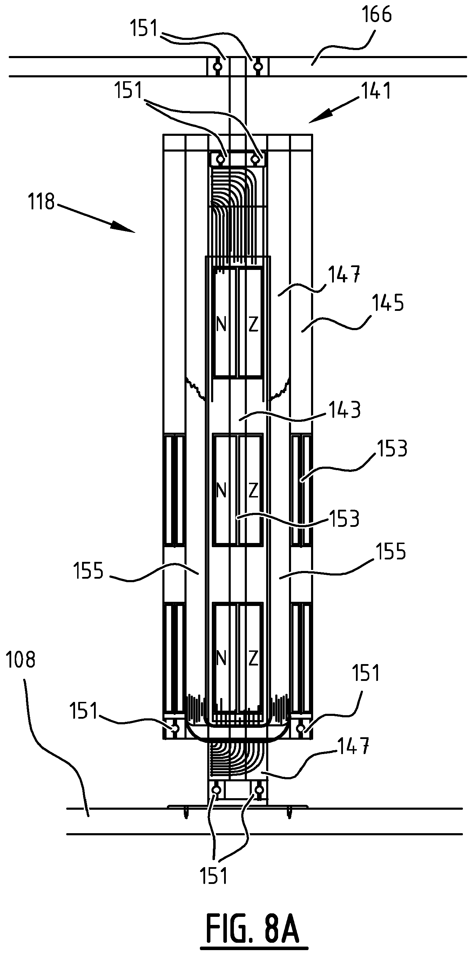

Generator 118 (figure 8A) shows a rotor 141. Rotor 141 comprises inner rotor 143 and outer rotor 145 which are connected fixedly to each other. Stator 147 is connected fixedly to bottom plate 108 of wind turbine 2. Rotor 141 is connected to vanes 116 such that the exertion of force on vanes 116 by the wind rotates rotor 141 relative to stator 147. Stator 141 is connected rotatably to stator 147 by means of ball bearings 151. Permanent magnets 153 are provided on rotor 141 and coils 155 are provided on stator 147. By rotation of rotor 141 relative to stator 147 an induction current is generated by the changing magnetic field in coils 155.

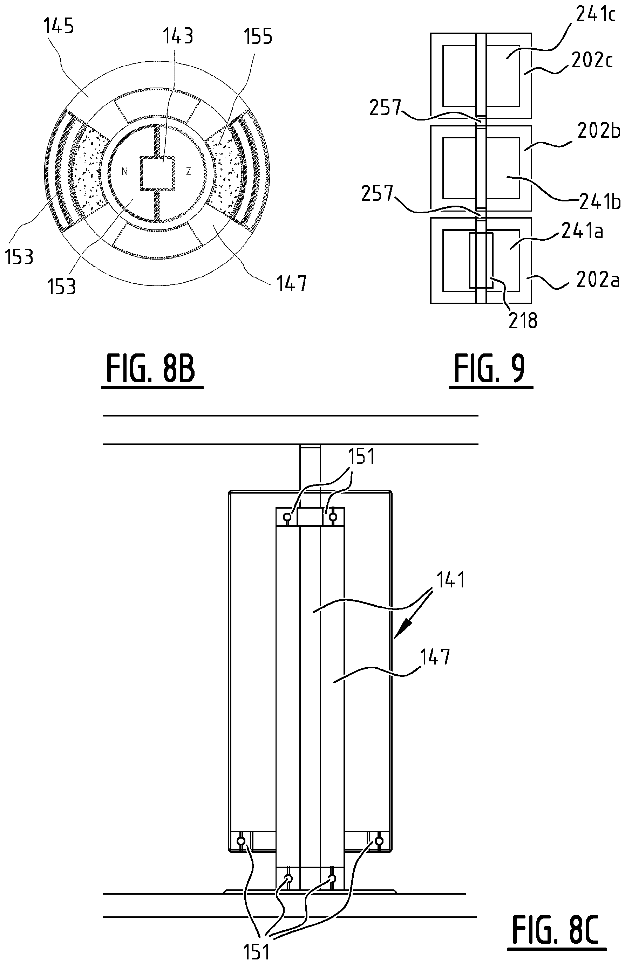

Coils 155 (figure 8B) are arranged on stator 147 which is positioned between inner rotor 143 and outer rotor 145. Permanent magnets 153 are arranged on inner rotor 143 and outer rotor 145. Because permanent magnets 153 are arranged on both sides of coils 155, the output of generator 118 is increased. Figure 8C once again shows that rotor 141 is rotatable about stator 147 by means of ball bearings 151.

In an embodiment according to the invention it is possible to place a plurality of wind turbines 202a, 202b, 202c (figure 9) on top of each other, wherein rotors 241a, 241b, 241c of respective wind turbines 202a, 202b, 202c are connected to each other by means of connecting rods 257. In this embodiment generator 218 is located in bottom wind turbine 202a. It will be apparent to the skilled person that generator 218 can also be arranged in one of the other wind turbines 202b, 202c. Owing to connecting rods 257, one single generator suffices to convert the wind energy of wind turbines 202a, 202b, 202c into current. Using one single generator 218 saves production costs.

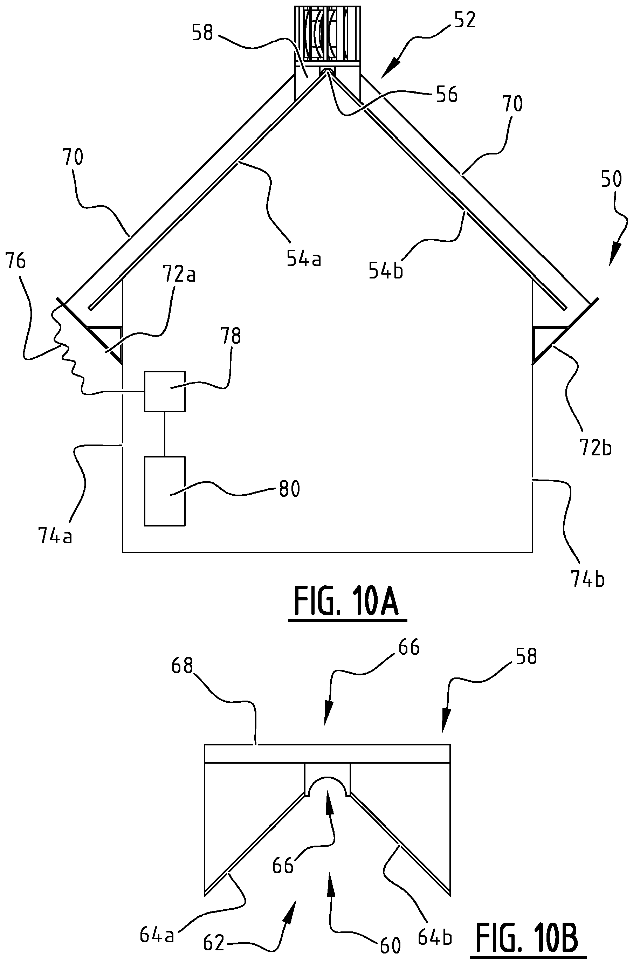

Home 50 (figure 10A) comprises a gable roof 52 with equilateral roof sides 54a, 54b. Mounting system 58 is placed on point 56 of gable roof 52. Mounting system 58 (figure 10B) comprises on underside 62 a reverse V-shaped cutaway 60 which is formed by two side parts 64a, 64b which are directed toward each other at an angle, as seen in the side view of figure 10B. Provided between side parts 64a, 64b is semicircular recess 66 which is configured to be placed over the ridge tiles of gable roof 52. Side parts 64a, 64b are configured to be placed on roofs 54a, 54b. Mounting surface 68 is positioned on upper side 66. Lower plate 8 of wind turbine 2 can be secured on mounting surface 68. This can for instance be done by means of screws, bolts, with a snap system or by adhesion. Wind turbine 2 can hereby be placed on gable roof 52 in simple manner. Arranged from and on either side of mounting system 58 are mounting cables 70 which run parallel to roofs 54a, 54b in tensioned state and are attached to tensioning elements 72a, 72b. Tensioning elements 72a, 72b are attached to side walls 74a, 74b. Also connected to generator 18 of wind turbine 2 is an electric wire 76 which runs along attaching element 72a. Electric wire 76 transmits the current generated by generator 18 to transducer 78, which then supplies the converted current to a meter cabinet 80. Hereby, wind turbine 2 can be used to supply current to private homes.

In an embodiment according to the invention wind blows into air inlet openings 40 along wind catchers 20 and is carried to air outlet openings 42. There, the wind flows against vanes 16. Owing to the curved concave surface of vanes 16 and intermediate plates 44, 46, the wind is caught effectively and vanes 16 are rotated about rotation axis C. Rotation of vanes 16 also rotates permanent magnets 34, 36 which are connected to vanes 16. A relative movement between magnets 34, 36 and coils 28, 30 is hereby realized in that coils 28, 30 are fixed in, on or at housing 4. Owing to the relative movement between magnets 34, 36 and coils 28, 30, an induction current is generated in coils 28, 30, which current can then be supplied to transducer 78 which converts the current into current which can be supplied to meter cabinet 80.

The present invention is by no means limited to the above described embodiments thereof. The rights sought are defined by the following claims, within the scope of which many modifications can be envisaged.

## Claims

1. Wind turbine, comprising:
- a cylindrical housing comprising an upper plate and lower plate which each extend in a first direction and are arranged substantially parallel at a distance from each other, and further comprising a number of wind catchers extending substantially between the upper and lower plate;
- a plurality of vanes which are arranged in the housing and are connected rotatably to the housing, wherein a rotation axis of the vanes extends in a second direction which is substantially perpendicular to the first direction; and
- a generator comprising a number of and a number of coils arranged on the housing, wherein the magnets rotate relative to the coils due to rotation of the vanes.

2. Wind turbine according to claim 1, wherein each of the plurality of wind catchers extends at least partially inward from an outer periphery of the housing, as seen in the second direction, such that an inner space is provided between the wind catchers, wherein air inlet openings are provided on the outer periphery between the plurality of wind catchers for the purpose of allowing air into the inner space, wherein the wind catchers are preferably panel-like and have a curved section, as seen in the second direction, wherein air outlet openings are preferably provided on an inner space side of the wind catchers, wherein a size of the air inlet openings is greater than a size of the air outlet openings.

3. Wind turbine according to any one of the foregoing claims, wherein an edge of the wind catchers which extends substantially in the second direction and is positioned closest to the vanes comprises an inward curve, wherein the inward curve is directed away from the vanes.

4. Wind turbine according to any one of the foregoing claims, wherein the vanes are twisted.

5. Wind turbine according to any one of the foregoing claims, wherein the vanes are panel-like and extend at least partially in the second direction, wherein the vanes are curved as seen in a radial direction.

6. Wind turbine according to claim 5, wherein an inner edge of the vanes which extends substantially in the second direction and is positioned closest to the rotation axis comprises an outward-directed curve, wherein the outward-directed curve extends toward the rotation axis.

7. Wind turbine according to any one of the foregoing claims, wherein the vanes extend radially from a predetermined distance from the rotation axis to a position close to the wind vanes as seen in a second direction, such that an inner radial space is formed between the vanes for allowing in airflow.

8. Wind turbine according to any one of the foregoing claims, wherein the generator comprises a rotor and a stator, wherein the stator is connected fixedly to the housing and is provided with coils, and wherein the rotor is connected to the vanes and is connected rotatably to the stator and is provided with permanent magnets.

9. Wind turbine according to claim 8, wherein the rotor comprises an inner rotor and an outer rotor, wherein the stator is positioned between the inner rotor and the outer rotor, and wherein permanent magnets are provided on the inner rotor and the outer rotor.

10. Wind turbine according to any one of the foregoing claims, wherein the vanes comprise a circular intermediate element which extends in the first direction for the purpose of stabilizing the vanes.

11. Wind turbine according to any one of the foregoing claims, wherein the generator comprises alternately permanent magnets and coils as seen along the second direction, and/or wherein the magnets are connected to the vanes and wherein the coils are arranged on a fixed shaft of the housing which extends along the rotation axis, wherein the coils and magnets are provided in pairs, wherein each individual coil and magnet of the pairs are positioned on opposite sides of the fixed shaft, and/or wherein the vanes and/or the housing are made of polypropylene.

12. Assembly of wind turbines according to any one of the foregoing claims, wherein at least a part of the plurality of wind turbines is stacked on top of each other, wherein the lower plate of a first wind turbine supports on an upper plate of a second wind turbine.

13. Wind turbine system, comprising a wind turbine according to any one of the foregoing claims, and a mounting system for placing the wind turbine on a roof, wherein the mounting system comprises a reverse V-shaped cutaway on a first side for the purpose of placing the mounting system on a gable roof and/or comprises a flat mounting surface on an opposite second side for the purpose of supporting the wind turbine, wherein the mounting system preferably further comprises two mounting lines, wherein each of the mounting lines is configured to attach the mounting system to a side wall.

14. Building provided with a wind turbine or wind turbine system according to any one of the foregoing claims.

15. Method for generating electricity, comprising of:
- providing a wind turbine according to any one of the claims 1-11 or wind turbine system according to claim 13; and
- having the wind rotate the generator for the purpose of generating electricity.
